(19) Europäisches Patentamt
European Patent Office
Office européen des brevets

(11) Veröffentlichungsnummer: **0 412 428 B1**

(12) # EUROPÄISCHE PATENTSCHRIFT

(45) Veröffentlichungstag der Patentschrift: **02.11.94**

(51) Int. Cl.5: **C04B 35/65**, C04B 35/58

(21) Anmeldenummer: **90114798.3**

(22) Anmeldetag: **01.08.90**

Die Akte enthält technische Angaben, die nach dem Eingang der Anmeldung eingereicht wurden und die nicht in dieser Patentschrift enthalten sind.

(54) **Keramische Verbundkörper und Verfahren zu ihrer Herstellung.**

(30) Priorität: **07.08.89 DE 3926077**

(43) Veröffentlichungstag der Anmeldung:
**13.02.91 Patentblatt 91/07**

(45) Bekanntmachung des Hinweises auf die Patenterteilung:
**02.11.94 Patentblatt 94/44**

(84) Benannte Vertragsstaaten:
**DE FR GB IT SE**

(56) Entgegenhaltungen:
**EP-A- 0 304 697**
**WO-A-80/00021**
**GB-A- 2 106 528**
**US-A- 4 105 455**

(73) Patentinhaber: **Greil, Peter, Prof. Dr.**
**Dahlienweg 14**
**D-21218 Seevetal (DE)**

(72) Erfinder: **Seibold, Michael, Dipl.-Ing.**
**Josephsburgstrasse 7**
**D-81673 München (DE)**
Erfinder: **Greil, Peter, Prof. Dr.**
**Dahlienweg 14**
**D-21218 Seevetal (DE)**
Erfinder: **Claussen, Nils, Prof. Dr.**
**Auf den Schwarzen Bergen 15**
**D-2107 Rosengarten 5 (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

**EP 0 412 428 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft keramische Formkörper hoher Dichte und ein Verfahren zu ihrer Herstellung.

Die Herstellung keramischer Pulver, Fasern und Oberflächenbeschichtungen durch Pyrolyse siliciumorganischer Polymerverbindungen ist Gegenstand zahlreicher Veröffentlichungen und Patente; dabei werden folgende Verbindungen bevorzugt verwendet:

| Grundbaustein | Bezeichnung |
|---|---|
| 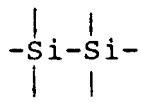 | Polysilane |
| 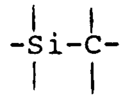 | Polycarbosilane |
| 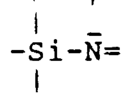 | Polysilazane |
| 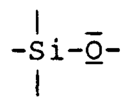 | Polysiloxane |

Die erfolgreiche Synthese von Siliciumcarbid (Sic) aus Polysilanen wird unter anderem von der Arbeitsgruppe um S. Yajima an der Tohuku University beschrieben (S. Yajima, Special Heat-Resisting Materials from Organometallic Polymers, Am.Ceram.Soc.Bull. 62 (1983) Nr. 8, S.893 ff). Dieses Verfahren wird industriell bei der Herstellung von SiC-Fasern verwendet; daneben wird in Kombination mit einem Polyphenylborosiloxan und Titanalkoxiden die Anwendung als Sinterzusatz oder in der Fügetechnik beschrieben (S. Yajima, SiC Bodies Sintered with Three-Dimensional Cross-linked Polycarbosilane, Am.Ceram.Soc.Bull. 56 (1977) Nr. 12, S.1060 ff; S. Yajima et al, Joining of SiC to SiC Using Polyborosiloxane, Am.Ceram.Soc.Bull. 60 (1981) Nr. 2, S.253).

Vorstufen zur Herstellung von Siliciumnitridkeramiken ($Si_3N_4$) werden unter anderem von D. Seyferth erwähnt, wobei Alkylchlorsilane mit Ammoniak unter Zuhilfenahme einer starken Lewis-Base, wie z.B. KH, umgesetzt werden (D. Seyferth et al, High Yield Synthesis of $Si_3N_4$/SiC Ceramic Materials by Pyrolysis of a Novel Polysilazane, J.Am.Ceram.Soc. (1984) C-132).

Die Pyrolyse von Siloxanen, wie z.B. Mischungen von Methylsesquisiloxan und Phenylmethylsesquisiloxan führt in Inertgas- oder reduzierender Atmosphäre zu SiC-haltigen Produkten (D. White, Preparation of Silicon Carbide from Organosilicon Gels, Adv.Ceram.Mat. 2 (1987) Nr. 2, S.45 ff).

Bisher konnten aber massive Formkörper mit hoher Dichte (d.h. einer Dichte von größer als 85% der theoretischen Dichte des reinen Materials) nicht durch die oben beschriebenen Verfahren hergestellt werden, weil die während der thermischen Behandlung freiwerdenden Zersetzungsprodukte zu einer hohen Porosität und damit zu einer drastischen Verschlechterung der angestrebten mechanischen Eigenschaften führen. Außerdem hat der Dichtesprung vom polymeren Ausgangsmaterial zum Endprodukt (ca. 1 $g/cm^3 \rightarrow$ mindestens 3 $g/cm^3$) eine drastische Schwindung zur Folge, die meist zur Zerstörung eines kompakten Körpers führt. Deshalb wurden die bekannten Verfahren bisher nur zur Herstellung von Produkten genutzt, deren geometrische Verhältnisse und Formungsverfahren eine Beherrschung dieser Problematik erlauben, wie z.B. das Faserspinnen, die Herstellung von Schwämmen oder Filtern und die Beschichtungstechnologie.

Die bei diesen Verfahren stattfindende Pyrolyse wurde eingehend untersucht und kann schematisch mit den folgenden Reaktionsgleichungen beschrieben werden:
Ausgangspolymer z.B. Polysilan:

$$-(R_2Si)_n- \rightarrow SiC + C + RH + H_2 + \ldots \text{ (R = Alkyl)}$$

Ausgangspolymer z.B. Polysilazan:

$-(RSiHNH)_m(RSiN)_m \rightarrow Si_3N_4 + SiC + C + RH + H_2 + ...$ (R = Alkyl)

(vgl. dazu z.B. Y. Hasegawa, Synthesis of Continuous Silicon Carbide Fiber, Part 3 Pyrolysis Process of Polycarbosilane and Structure of the Products, J.Mater.Sci. 18 (1983), S.3633 ff). Neben gasförmigen Zersetzungsprodukten entsteht während des Pyrolysevorgangs auch immer fester Kohlenstoff.

Durch die Einlagerung von keramischen, nichtoxidischen Pulvern, wie z.B. Kohlenstoff (Graphit), Nitriden, Carbiden, Boriden oder Siliciden sowie Verstärkungskomponenten ist es zwar möglich, den Volumenanteil des Polymers auf bis zu 30% zu senken (vgl. EP-246 104, November 1987); die oben beschriebenen verfahrenstechnischen Probleme, die besonders bei mehrphasigen Verbundkeramiken zu Poren- oder Rißbildung führen, bleiben jedoch bestehen (F. Hurwitz et al, Silsesquioxanes as Precursors to Ceramic Composites, Ceram.Eng.Sci.Proc. 8 (1987) Nr. 7/8, S.723 ff). Eine Herstellungstechnik die eine mehrmalige Wiederholung des Imprägnier- oder Pyrolyseschrittes vorsieht, besitzt auf Grund der stark verlängerten Prozeßdauer wirtschaftliche Nachteile. Hoch beanspruchte keramische Formkörper, insbesondere für den Einsatz im Motorenbau, in der Luft- und Raumfahrttechnik in Wärmekraftmaschinen oder als Umformwerkzeuge verlangen eine möglichst geschlossene Porosität, im allgemeinen mindestens 85%, und insbesondere ein Erreichen von 95% oder mehr der theoretischen Dichte des gewünschten Werkstoffes.

Aufgabenstellung der vorliegenden Erfindung ist es, die mit den vorstehend beschriebenen Verfahren verbundenen Nachteile, die zu Verbundkörpern mit zu hoher Porosität und damit unbefriedigenden mechanischen und thermischen Eigenschaften führen, zu überwinden und keramische Verbundkörper und ein Verfahren zur Herstellung solcher keramischer Verbundkörper bereitzustellen, die eine hohe Dichte und Eigenschaften aufweisen, die sie für eine Verwendung, bei der sie mechanisch und thermisch hoch beansprucht werden, geeignet machen.

Diese Aufgabe wird mit der vorliegenden Erfindung gelöst.

Gegenstand der Erfindung ist ein keramischer Formkörper gemäß Patentanspruch 1 aus einer Matrix, die Einlagerungen von Hartstoffteilchen und/oder andere Verstärkungskomponenten enthält, und dadurch erhältlich ist, daß man eine Mischung aus einem siliciumorganischen Polymer mit einem metallischen Füllstoff einem Pyrolyse- und Reaktionsprozeß unterwirft.

Zweckmäßige Ausgestaltungen davon sind Gegenstand der Ansprüche 2 bis 5.

Nach dem erfindungsgemäßen Verfahren reagieren die Zersetzungsprodukte der Polymeren mit den erfindungsgemäß eingesetzten reaktiven Füllstoffkomponenten unter Carbidbildung; dadurch läßt sich ein vollständig durchreagierter keramischer Formkörper mit einer gezielt einstellbaren Porosität erhalten.

Die Matrix der erfindungsgemäßen keramischen Formkörper ist vorzugsweise eine ein- oder mehrphasige, amorphe, teilkristalline oder kristalline Matrix aus Siliciumcarbid (SiC), Siliciumnitrid ($Si_3N_4$), Siliciumdioxid ($SiO_2$) oder aus Mischungen davon, wie z.B. aus Oxycarbiden, Oxynitriden, Carbonitriden und/oder Oxycarbonitriden.

Vorzugsweise sind die Einlagerungen von Hartstoffteilchen und/oder anderen Verstärkungskomponenten Carbide und/oder Nitride von Titan, Zirkonium, Hafnium,Vanadium, Niob, Tantal, Chrom, Molybdän und/oder Wolfram; sie liegen in einer Menge von bis zu 70 Volumen-%, vorzugsweise von 10 bis 50 Volumen-%, bezogen auf den durchreagierten keramischen Verbundkörper vor.

Die neben oder anstelle von Hartstoffteilchen gegebenenfalls vorhandenen anderen Verstärkungskomponenten sind vorzugsweise Fasern, Whisker und/oder Platelets, oder ähnliche Verstärkungsmaterialien.

Ein weiterer Gegenstand der Erfindung ist ein Verfahren zur Herstellung der erfindungsgemäßen keramischen Verbundkörper durch Pyrolyse siliciumorganischer Polymerverbindungen, das dadurch gekennzeichnet ist, daß man dem Ausgangspolymer einen Füllstoff, der mit den bei der Pyrolyse der Polymerverbindungen entstehenden Zersetzungsprodukten reagiert, zumischt.

Das Ausgangsgemisch aus Polymer und Füllstoffkomponenten, das möglichst homogen sein soll, kann durch an sich bekannte, übliche Kunststofformgebungstechniken in die gewünschte Form gebracht werden, und wird dann einem Pyrolyse- und Reaktionsprozeß unterworfen.

Der Pyrolyse- und Reaktionsprozeß wird vorzugsweise bei einer Temperatur im Bereich von 600 bis 1500 °C, insbesondere von 800 bis 1200 °C durchgeführt.

Beim erfindungsgemäßen Herstellungsverfahren kann man von in der Literatur bekannten und zum Teil kommerziell erhältlichen siliciumorganischen Polymerverbindungen ausgehen. Als siliciumorganische Polymere werden vorzugsweise Polysilane, Polycarbosilane, Polysilazane und/oder Polysiloxane eingesetzt; es können auch Mischungen aus zwei oder mehreren dieser Polymeren verwendet werden. Durch den Pyrolyse- und Reaktionsprozeß werden Siliciumcarbid (SiC), Siliciumnitrid ($Si_3N_4$), Siliciumdioxid ($SiO_2$) oder Mischungen davon, wie z.B. Oxycarbide, Oxynitride, Carbonitride und/oder Oxycarbonitride erhalten. Anstelle dieser Polymeren und deren Mischungen können auch Precursoren (Zwischenverbindungen) dieser Polymeren eingesetzt werden, vorzugsweise Aluminium-, Titan-, Zirkonium- oder Bor-haltige Precursoren.

Für den Einsatz im erfindungsgemäßen Verfahren besonders günstig sind Polymere, die eine hohe keramische Ausbeute erbringen. Dabei sind Polymerisate mit Käfigstrukturen und sperrigen Nebengruppen, die als sterische Hindernisse bei Abspaltungsreaktionen wirken können, oder die Einbringung von zusätzlichen Doppelbindungen, die eine weitere Vernetzung während der Temperaturbehandlung ermöglichen, besonders bevorzugt (vgl. z.B. K.J. Wynne et al, Ceramics via Polymer Pyrolysis, Ann.Rev.Mater.Sci. (1984) 14, S.297 ff).

Als reaktive Füllstoffkomponenten werde vorzugsweise solche aus Titan, Zirkonium, Hafnium, Vanadium, Niob, Tantal, Chrom, Molybdän, Wolfram, Aluminium, Bor, Silicium, Lanthaniden und/oder intermetallischen Verbindungen der vierten bis sechsten Nebengruppe des Periodensystems mit Bor, Silicium und/oder Aluminium eingesetzt. Anstelle dieser Füllstoffkomponenten kann es auch zweckmäßig sein, metallorganische Verbindungen und Vorstufen, wie z.B. Alkyle, Cycloalkyle, Aryle, Akoxide und/oder salzartige Verbindungen, wie z.B. Hydride oder Oxide, der Metalle und/oder intermetallischen Verbindungen einzusetzen.

Die reaktiven Füllstoffkomponenten können z.B. in löslicher Form, als Pulver und/oder in anderer Form, z.B. als Fasern, Whisker oder Platelets, eingesetzt werden. Bei Verwendung oder Mitverwendung von Fasern, Whiskern und/oder Platelets kann dies zu einer zusätzlichen Verstärkung des keramischen Verbundkörpers führen.

Es kann auch zweckmäßig sein, zusätzlich zu den vorstehend genannten Füllstoffkomponenten auf der Basis der vorstehend angegebenen Metalle und/oder Verbindungen auch Füllstoffkomponenten auf der Basis von Platingruppenmetallen (Ruthenium, Rhodium, Palladium, Osmium, Iridium und/oder Platin), von Eisen, Kobalt und/oder Nickel einzusetzen.

Der Füllstoffanteil wird im Hinblick auf die zu erwartenden Stickstoff- oder Kohlenstofffragmente und das gewünschte Reaktionsprodukt entsprechend eingestellt. Im Falle des Kohlenstoffs werden als reaktive Füllstoffe in erster Linie die vorstehend genannten Metalle, Halbmetalle und intermetallischen Verbindungen, die mit Kohlenstoff bei Pyrolysebedingungen zu hochtemperaturstabilen Carbiden reagieren, eingesetzt. In Tabelle 1 sind geeignete Füllstoffe aus der vierten bis sechsten Nebengruppe des Periodensystems sowie die Eigenschaften der entsprechenden Carbide aufgeführt.

Tabelle 1

| Wichtige Eigenschaften der Metalle und entsprechenden Carbide der vierten bis sechsten Nebengruppe der Periodensystems | | | | | | | | | |
|---|---|---|---|---|---|---|---|---|---|
| Metall | Ti | Zr | Hf | V | Nb | Ta | Cr | Mo | W |
| $\rho$ (g/cm$^3$) | 4,50 | 6,49 | 13,31 | 5,96 | 8,57 | 16,6 | 7,20 | 10,20 | 19,35 |
| $\rho$ Carbid (g/cm$^3$) | 4,93 | 6,73 | 12,20 | 5,77 | 7,60 | 13,90 | 6,68 | 8,20 | 15,63 |
| $T_{m.Carbid}$ (°C) | 3140 | 3540 | 3890 | 2810 | 3500 | 3880 | 1890 | 2690 | 2870 |
| $\Delta V$ (%) | 14,2 | 9,1 | 16,4 | 27,6 | 27,3 | 27,3 | 24,4 | 21,8 | 31,9 |

Die vorstehend genannten Füllstoffkomponenten auf der Basis von Metallen und/oder intermetallischen Verbindungen der vierten bis sechsten Nebengruppe des Periodensystems und von Bor, Silicium und/oder Aluminium werden zweckmäßigerweise in einer Menge von bis zu 70 Volumen-%, vorzugsweise in einer Menge von 10 bis 50 Volumen-%, bezogen auf die reinen Metalle und den durchreagierten keramischen Compositwerkstoff, eingesetzt. Die vorstehend genannten zusätzlichen Füllstoffkomponenten auf der Basis von Platingruppenmetallen, von Eisen, Kobalt und/oder Nickel werden zweckmäßigerweise in einer Menge von bis zu 10 Masse-%, vorzugsweise von 0,5 bis 5 Masse-%, eingesetzt, bezogen auf die reinen Metalle und den durchreagierten keramischen Compositwerkstoff.

Verwendet man die Füllstoffkomponenten und zusätzlichen Füllstoffkomponenten in Form ihrer metallorganischen Verbindungen, Vorstufen und/oder salzartigen Verbindungen, so kann es zweckmäßig sein, diese Verbindungen vor der Formgebung der Mischung zunächst in die entsprechenden Metalle und/oder metallischen Verbindungen überzuführen, vorzugsweise im Temperaturbereich von 20 bis 1000°C, und daran anschließend die Formgebung und den Pyrolyse- und Reaktionsprozeß durchzuführen.

Die Herstellung der Mischung aus Polymeren und Füllstoffkomponenten kann auf eine dafür an sich bekannte und gebräuchliche Methode erfolgen. Die Polymeren können z.B. durch ein geeignetes Lösungsmittel oder durch Aufschmelzen mit den Füllstoffen zu einer homogenen, je nach dem gewählten Formgebungsverfahren verschieden viskosen Suspension vermischt werden. In einer Ausführungsform werden die flüssigen oder festen Füllstoffkomponenten mit dem in einem Lösungsmittel gelösten oder schmelzflüssigen siliciumorganischen Polymer gemischt; zweckmäßigerweise erfolgt die Mischung z.B. durch Dispergieren der Füllstoffkomponenten in einer Lösung des Polymeren in einem geeigneten Lösungsmittel. Geeignete Lösungsmittel sind insbesondere schwach bis weitgehend unpolare organische Lösungsmittel, wie z.B. Tetrahydrofuran, Chloroform, Toluol.

Die Vermischung der Polymere und Füllstoffkomponenten kann z.B auch in der Weise erfolgen, daß die Füllstoffpartikel in einer möglichst zähviskosen Flüssigkeit, wie z.B. Glycerin oder Polyethylenglykol dispergiert werden. Die Polymere werden dabei als Lösung in einem geeigneten, d.h. mit der zähviskosen Vorlage nicht mischbaren Lösungsmittel, wie z.B. Chloroform, zugetropft und die entstehende Emulsion kräftig gerührt. Das Lösungsmittel wird anschließend im Vakuum abgezogen, der Niederschlag filtriert und die mit dem gewünschten Polymer beschichteten Füllstoffpartikel getrocknet.

In einer bevorzugten Ausführungsform arbeitet man mit einem Polymer/Füllstoffkomponenten-Lösungsmittel-System, aus dem das Lösungsmittel vor der Formgebung weitgehend entfernt wird, und die viskose Suspension dann, vorzugsweise im Temperaturbereich zwischen 80 und 300 °C, durch ein an sich bekanntes übliches Polymerformgebungsverfahren in die gewünschte Form gebracht wird.

Durch die bei der nach dem erfindungsgemäßen Verfahren erfolgenden Carbidbildung stattfindenden Volumenzunahme .V wird die durch die Polymerzersetzung entstehende Porosität ausgeglichen; zum Abtransport der gasförmigen Zersetzungsprodukte erweisen sich möglichst niedrigmolekulare Fragmente und insbesondere Wasserstoff günstig. Deshalb sind erfindungsgemäß besonders solche Elemente und Verbindungen als Füllerzusätze geeignet, die zusätzlich eine katalytische Wirkung bei der Spaltung höhermolekularer Fragmente sowie günstige Diffusionseigenschaften für den freiwerdenden Wasserstoff zeigen. Dies kann durch die zusätzlich verwendeten Füllstoffkomponenten auf der Basis von Platingruppenmetallen, von Eisen, Kobalt und/oder Nickel gefördert werden, die zur Aufspaltung von gasförmigen Kohlenwasserstoffragmenten in niedriger molekulare Crackprodukte führen. Mit dem erfindungsgemäßen Verfahren ist es also möglich, gezielt die Kinetik des Pyrolyseprozesses zu steuern und eine definierte Porosität bis hin zu vollständiger Dichte des Formkörpers einzustellen und zu erreichen.

Die Reaktionsgeschwindigkeit der Carbidbildung und der diffusionskontrollierten Entfernung des Wasserstoffs bei der Umsetzung zur Keramik hängt in entscheidender Weise von der homogenen Verteilung des reaktiven Füllstoffes in der Polymermatrix ab. Dies kann z.B. dadurch verbessert werden, daß man anstelle der metallischen Pulver metallorganische oder anorganische Ausgangsverbindungen in feindisperser oder flüssiger Form mit dem Polymer vermischt.

Zur Formgebung der Polymer/Füllstoffkomponenten-Mischung können die für Kunststoffe bekannten Formgebungstechniken, wie z.B. Pressen, Spritzgießen, Imprägnieren und Naßwickeln eingesetzt werden. Hierzu wird die Polymer-Füller-Mischung erhitzt, vorzugsweise auf Temperaturen zwischen 80 und 300 °C, so daß der bei diesen Temperaturen viskose Polymeranteil eine plastische Formgebung gestattet. Im Gegensatz zu den in der Keramik gängigen Verfahren muß der nötige Polymeranteil, der für die später stattfindenden Sintervorgänge bei üblichen keramischen Spritzgußteilchen durch aufwendige und vor allem zeitraubende Ausbrennverfahren entfernt werden muß, nicht gesondert zugegeben werden.

Durch die mögliche Anwendung üblicher Polymerformgebungsverfahren läßt sich die Formenvielfalt stark ausweiten, und es ist möglich, auch komplexe Geometrien ohne aufwendige Montage von mehreren Einzelteilen zu erhalten.

Der so geformte Körper kann direkt ohne eine weitere Nachbehandlung dem Reaktions- bzw. Pyrolyseschritt unterzogen werden. Der Formkörper wird hierzu in einer Edelgas- (wie z.B. Argon oder Helium), Formiergas- (z.B. Wasserstoff und Wasserstoff/Stickstoff-Gemische) oder in einer Reaktionsgasatmosphäre (wie z.B. Stickstoff oder Kohlenwasserstoffe $CnH_{2n+2}$, wobei n vorzugsweise 1 bis 4 bedeutet, wie z.B. Methan, Propan, Butan; Ammoniak), oder in Mischungen davon der Temperaturbehandlung unterzogen. Während des Aufheizvorganges tritt eine Umsetzung der Polymermatrix zu Siliciumcarbid (SiC), Siliciumnitrid ($Si_3N_4$), Siliciumdioxid ($SiO_2$) und von Mischungen davon unter Zersetzung des Polymeranteils der Mischung ein, wobei Kohlenwasserstoffragmente, Kohlenstoff und flüchtige siliciumorganische Spaltprodukte als gasförmige bzw. feste Produkte entstehen und mit den Füllstoffkomponenten zum Metallcarbid reagieren. Die zunächst höhermolekularen gasförmigen Fragmente können durch weitere Temperaturerhöhung und/oder durch die katalytisch wirkenden Metallzusätze, wie z.B. Ti, Mo und/oder die Metalle der Platingruppe, in kleinere, leichter durch Diffusionsprozesse entfernbare Kohlenwasserstoffe bzw. Wasserstoff aufgespalten werden. Eine Steuerung des Reaktionsverlaufs zum Metallcarbid kann durch Variation des

Fülleranteils im oben angegebenen, insbesondere bevorzugt genannten Bereich, sowie der Aufheiz- bzw. Reaktionsdauer erreicht werden. Auf diese Weise lassen sich gezielt mehrphasige Nichtoxidkeramiken herstellen, deren Gefügeporosität in weiten Grenzen, bis hin zu vollständiger Dichte, steuer- und einstellbar ist. Die für diese Systeme nach dem Stand der Technik üblichen Herstellungstemperaturen, z.B. durch Heißpressen (mit einer Temperatur von größer als 1700 °C) können dabei um mehrere hundert Grad unterschritten werden. Zudem erlaubt das Vorhandensein eines viskosen Polymeranteils die leichte Einbringung zusätzlicher Verstärkungskomponenten, wie z.B. von Fasern, Whiskern oder Platelets, wobei diese nicht nur aus für keramische Systeme üblichen Stoffen, wie z.B. Siliciumcarbid oder -nitrid, sondern auch aus den Füllstoffkomponenten bzw. den diesen entsprechenden Metallen bestehen können, die dann in das gewünschte Carbid umgwandelt werden.

Auf Grund der erfindungsgemäß erreichbaren hohen Dichte und den damit verbundenen hervorragenden mechanischen und thermischen Eigenschaften eignen sich die erfindungsgemäßen keramischen Verbundkörper sehr gut als Hochtemperatur- und verschleißfeste Keramikverbundwerkstoffe für Maschinen- und Bauteile mit hoher mechanischer und thermischer Belastbarkeit. Gegenstand der Erfindung ist deshalb auch die Verwendung eines erfindungsgemäßen keramischen Formkörpers für Maschinen- und Bauteile mit hoher mechanischer und thermischer Belastbarkeit, und insbesondere für den Einsatz im Motorenbau, in der Luft- und Raumfahrttechnik, in Wärmekraftmaschinen oder als Umformwerkzeuge.

Die nachfolgenden Beispiele erläutern die Erfindung in Verbindung mit der beigefügten Zeichnung näher. Wenn nicht anders angegeben, beziehen sich Teile und Prozentangaben auf das Volumen; Temperaturangaben auf die Celsius-Skala.

In der Zeichnung stellen dar:

- Bild 1 - warmgepreßte und pyrolysierte Formkörper aus einer Siloxan-Polymermischung, sowie Ti- und TiC-Pulver.
- Bild 2 - Röntgendiffraktogramme eines Formkörpers (10 v/o Ti-Pulver, 10 v/o TiC-Pulver) nach verschiedenen Prozeßschritten.
- Bild 3 - Bruchfläche eines pyrolysierten Formkörpers (1200 °C, 36h, Ar, 10 v/o Ti, 10 v/o SiC-Platelets).

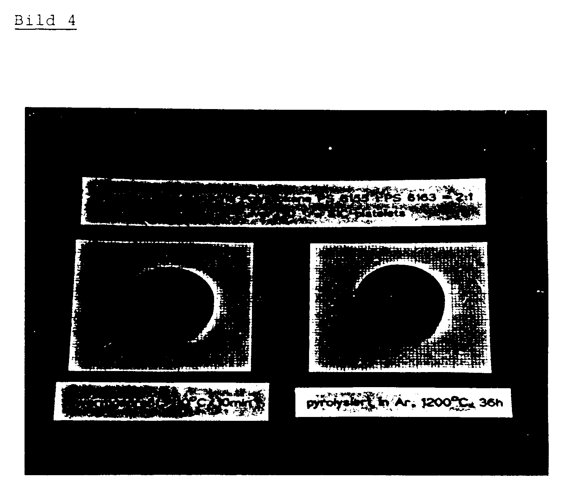

- Bild 4 - Probekörper, die gemäß der Vorschrift des Beispiels 3 hergestellt und pyrolysiert wurden, die lineare Schwindung beträgt dabei 2,0%. Es handelt sich um warmgepreßte und pyrolysierte Formkörper aus einer Siloxan-Polymermischung, sowie Ti-Pulver und SiC-Platelets.

**Beispiel 1:**

In einen 500ml Zweihalskolben werden 200 ml Glycerin vorgelegt und 15,0 g Titanpulver (ALFA Chemicals/VENTRON 00901, - 200mesh) durch kräftiges Rühren mit einem Magnetrührer dispergiert. Zu der Mischung wird eine Lösung, bestehend aus 2,5 g Polyphenylpropylsesquioxan (PETRARCH SYSTEMS PS 6163) und 5,0 g Polymethylsilsesquioxan (PS 6155) in 50 ml Chloroform gelöst. Durch anhaltendes Rühren werden die Titanpartikel in der Emulsion aus Glycerin und Chloroform fein verteilt. Anschließend wird der Reaktionsmischung das Lösungsmittel Chloroform im Vakuum abgezogen, wobei die Mischung im Ölbad leicht (30 - 35 °C) erwärmt wird.

Die Polymermischung der beiden Siloxane umhüllt nach dem Entfernen des Lösungsmittels die Titanteilchen und bildet mit diesen einen Niederschlag, der anschließend leicht abgefrittet und getrocknet werden kann, nachdem dem Glycerin 200 ml destillierten Wassers zugegeben worden sind.

Das erhaltene, gut rieselfähige Granulat wird bei 150 °C, 30 min bei einem Druck von 31,5 MPa in einer Warmpresse zu einem Formkörper verdichtet. Dieser kann unter fließendem Argon (Durchflußrate: 50 ml/min) nach folgendem Schema pyrolysiert werden:

| Aufheiz-/Abkühlrate (°C/min) | Endtemperatur (°C) | Haltezeit (min) |
|---|---|---|
| 1 | 335 | 150 |
| 1 | 450 | 150 |
| 2 | 1000 | 600 |
| 5 | 20 | - |

Der pyrolysierte Körper, der aus in einer weitgehend amorphen Si-$O_x$-$C_y$-Matrix dispergierten TiC-Körnern besteht, besitzt eine Dichte von 2,9 g/$cm^3$ (entspricht einer relativen Dichte, bezogen auf die Röntgendichte des Verbundkörpers von ca. 80%). Große Bereiche der TiC-Phase sind weitgehend porenfrei

oder weisen nur Poren sehr geringer Größe, oft kleiner als 10 µm auf.

Durch eine Verringerung der Ausgangskorngröße (z.B. vorherige Mahlbehandlung) des Metallfüllers kann eine deutliche Steigerung der relativen Dichte auf mehr als 90% und damit eine Verbesserung der mechanischen Eigenschaften der Verbundkeramik erhalten werden.

**Beispiel 2:**

Das in Beispiel 1 beschriebene Verfahren einer Emulsionsbeschichtung wird wiederholt mit dem Unterschied, daß der Mischung aus den beiden Polysiloxanen sowohl 10 v/o Ti-Pulver als auch 10 v/o TiC-Pulver (H.C. STARCH, grade c.a.) zugesetzt werden. Diese Pulvermischng wird mit der Siloxanmischung beschichtet, getrocknet und verpreßt. Während des folgenden Pyrolyse- und Reaktionsprozesses kann die Ausbildung und Verteilung der entstehenden carbidischen Hartstoffphase durch Variation des keramischen Füllers TiC in Zusammenwirken mit dem metallischen Füller Titan gesteuert werden. Der Pyrolyseprozeß wird im vorliegenden Beispiel unter stehender Ar-Atmosphäre durchgeführt; folgendes Aufheizschema findet Anwendung:

| Aufheiz-/Abkühlrate (°C/min) | Endtemperatur (°C) | Haltezeit (min) |
|---|---|---|
| 0,25 | 240 | 300 |
| 0,25 | 520 | 300 |
| 0,25 | 740 | 150 |
| 1 | 1200 | 2160 |
| 5 | 20 | - |

Der keramische Formkörper, der nach dem Pyrolyseprozeß erhalten wird, weist nur eine lineare Schwindung, bezogen auf den warmgepreßten Vorkörper, von 3,2% auf; Bild 1 zeigt zwei Probekörper, die entsprechend der Verfahrensvorschrift des Beispiels 2 hergestellt und pyrolysiert wurden.

Das Röntgendiffraktogramm des warmgepreßten Körpers weist neben den TiC-Linien noch diejenigen von reinem Titan auf, während das entsprechende Diffraktogramm des Pyrolysates nur das Vorhandensein der kristallinen, carbidischen Phase TiC anzeigt.

**Beispiel 3:**

Es wird wie in Beispiel 2 verfahren, doch wird neben der Siloxanmischung eine Mischung aus 10 v/o Ti-Pulver und 10 v/o SiC-Platelets (ALCAN, C-axis) verwendet. Durch Zusatz der hochfesten Siliciumcarbidkristallite kann eine Verbesserung der mechanischen Eigenschaften des Verbundkörpers erwartet werden. Dabei spielen Mechanismen der Rißablenkung und der Energieverzehr an der Grenzfläche Platelet-Matrix eine wichtige Rolle (vgl. Bild 3).

**Beispiel 4:**

Es wird wie in Beispiel 1 verfahren, doch wird den in Chloroform gelösten, polymeren Siloxanen zu gleichen Gewichtsteilen ein aryl-, alkylsubstituiertes siliciumorganisches Co-Polymer zugesetzt, das entsprechend nachfolgendem Reaktionsschema hergestellt wird:

$$5(CH_3)_2SiCl_2 + CH_3C_6H_5SiCl_2 \xrightarrow[THF]{K}$$

$$1/n\ (((CH_3Si)_5(CH_3SiC_6H_5))_n + 12\ KCl$$

(R. West: Polysilastyrene: Phenylmethylsilane-Dimethylsilane copolymers as Precursors to Silicon Carbide. Am.Ceram.Soc.Bull. 62 (1983) No.2, S. 899).

Dabei kann der Sauerstoffantil der so erhaltenen $Si$-$O_x$-$C_y$-Verbundkeramik in weiten Teilen variiert werden, wobei für Bauteile hoher thermischer Beanspruchung sehr geringe Sauerstoffgehalte anzustreben sind, da diese wegen der Glasphasenbildung zu einer Verschlechterung des mechanischen Verhaltens

führen.

**Beispiel 5:**

Das in Beispiel 1 beschriebene Verfahren wird wiederholt mit dem Unterschied, daß der Mischung aus den beiden Polysiloxanen (insges. 7,5 g) 15,0 g Niobpulver (ALFA Chemicals/VENTRON 00471, -325mesh) zugesetzt werden. Die Niobpartikel werden mit der Siloxanmischung beschichtet, getrocknet und verpreßt. Die Pyrolyse unter fließendem Argon liefert einen NbC-haltigen Formkörper, der aus in einer weitgehend amorphen $Si-O_x-C_y$-Matrix dispergierten NbC-Körnern besteht. Das beschriebene Verfahren veranschaulicht einen Verfahrensweg zur Herstellung von NbC-Verbundkeramiken, die sonst nur durch pulvermetallurgische Form- und Herstellungsverfahren zugänglich sind. Dabei sind besonders die große Formenvielfalt der durch das Warmpressen beispielhaft beschriebenen Kunststofformgebungstechniken für eine Nutzung des erfindungsgemäßen Verfahrens von großem Vorteil.

**Beispiel 6:**

Die in Beispiel 5 beschriebene Verfahrensvorschrift wird abgewandelt, indem statt Niobpulver in gleicher Menge Wolframpulver (ALFA Chemicals/VENTRON 00620, 8-12μm) eingesetzt wird. Nach Pyrolyse- und Reaktionsprozeß unter fließendem Argon wird ein WC-haltiger Verbundkörper erhalten, der besonders aufgrund seiner hohen Abrasivfestigkeit für den Einsatz in Umformwerkzeugen gut geeignet ist. Erfindungsgemäß können auch durch die Wahl geeigneter Ausgangspulver bzw. Mischungen aus diesen Pulvern Mischcarbidkristalle aus dem System WC-TiC-NbC mit einer amorphen $SiC-SiO_2$-Bindephase leicht hergestellt werden, die als Hartmetallegierungen Verwendung finden. Besonders vorteilhaft ist die im Vergleich zu konventionellen Sintertemperaturen von Carbidmischungen (zwischen 1500 °C und 2500 °C) deutlich niedrigere Pyrolyse- und Reaktionstemperatur der erfindungsgemäßen Herstellvorschrift von 1000 °C bis 1200 °C.

**Beispiel 7:**

Für eine erfindungsgemäße Anwendung können auch bei Raumtemperatur flüssige Vorstufen (Precursoren) eingesetzt werden; im folgenden Beispiel wird dabei ein Polysilazan -(Si-N) = verwendet, das gemäß in der Literatur beschriebenem Herstellungsschema präpariert werden kann (vgl. D. Seyferth et al.: High Yield Synthesis of $Si_3N_4$/SiC Ceramic Materials by Pyrolysis of a Novel Polysilazane. J.Am.Ceram.Soc. (1984) C-132). 15,0 g Titanpulver werden in 100 ml Tetrahydrofuran suspendiert; hierin werden 20 g eines Polysilazanes gelöst, die Suspension kräftig gerührt und das Tetrahydrofuran in einem Rotationsverdampfer abgezogen. Die cremige, teigartige Masse kann in einem Warmpreßschritt bei 200 °C, 1h Haltezeit bei einem Druck von 0,5 MPa ausgehärtet werden. Der thermische Abbau des Silazanes erfolgt unter fließendem Ar (Durchflußrate: 25 ml/min) bis zu einer Temperatur von 1000 °C. Der entstehende Verbundkörper ist aus einer teilkristallinen $Si_3N_4$-/SiC-Matrix zusammengesetzt, in welche Titancarbonitrid-Körner eingelagert sind.

**Beipiel 8:**

Es wird wie in Beispiel 4 verfahren, doch wird dem Titanpulver eine Lösung zugetropft, die zu gleichen Gewichtsteilen aus dem Aryl-Alkyl-substituierten Copolymer und einer aluminiumorganischen Vorstufe, gelöst in Tetrahydrofuran, zusammengesetzt ist. Die aluminiumorganische Verbindung wird gemäß in der Literatur beschriebenem Reaktionsschema hergestellt (C.Rüssel, M.Seibold: A Novel Route to Aluminum Nitride using a Polyaminoalane Precursor: In: Mat.Res.Soc.Symp.Proc., "Better Ceramics Through Chemistry", C.J. Brinker et al. (Hrsg.) Vol.121 (1989), S.477-482).

Trocknung, Verpressen und Pyrolyse des Formkörpers erfolgt auf die beschriebene Weise. Die erhaltene Keramik geringer Porosität (weniger als 10%) weist ein N:C-Verhältnis von 1:1 auf. Somit kann durch eine erfindungsgemäße Anwendung auch eine SiC-/AlN-/TiC-Verbundkeramik hergestellt werden, die bei konventioneller pulvermetallurgischer Herstellungsweise sehr hohe Sintertemperaturen (über 2000 °C) sowie den Einsatz von Sinteradditiven (bor-, kohlenstoff-, calcium- oder yttriumhaltige Verbindungen) erfordert.

**Beispiel 9:**

Das in Beispiel 1 beschriebene Verfahren wird angewendet mit dem Unterschied, daß der Polymerlösung 15 $^{v}/o$ Titanhydrid (ALFA Chemicals/VENTRON 89183, 1-3µm) beigemischt werden. Wegen der starken Oxidations- und Feuchtigkeitsempfindlichkeit des Hydrids erfolgt das Vermischen und alle folgenden Arbeitsschritte bis zur Pyrolyse in Schutzgasatmosphäre (Ar). Sowohl Glycerin als auch Cloroform sind vor der Anwendung durch Molekularsiebtrocknung von Wasserrückständen zu befreien; das Verdünnen des Glycerins unterbleibt aus gleichem Grunde. Da die Korngröße des Hydrids ca. 1 µm beträgt, lassen sich dem Granulat noch 30 $^{v}/o$ SiC-Fasergelege (NIPPON CARBON, NICALON, ceramic grade) beimengen, die nach dem Warmpressen (110 °C, 60 min, 31,5 MPa) vollständig von Polymer-/Titanhydrid-Matrix umhüllt sind; die durchschnittliche Dicke eines Filamentes beträgt ca. 10 µm. Die Pyrolyse erfolgt in der beschriebenen Weise bis zu einer Temperatur von 1000 °C, wobei die Durchflußrate ca. 50 ml/min beträgt. Der keramische faserverstärkte SiC-/TiC-Verbundkörper kann in großer Formenvielfalt hergestellt werden, die Herstellungskosten liegen zudem deutlich unter konkurrierenden Gasphasenverfahren (CVI). Konventionellen Sinterverfahren ist eine Endlosfaserverstärkung nicht zugänglich.

**Beispiel 10:**

Eine Polymermischung wird, wie in Beispiel 1 beschrieben, hergestellt und zu einem gut rieselfähigen Granulat getrocknet. Dem Granulat werden 20 $^{v}/o$ Wolfram-Kurzfasern (KAWECKI-BERYLO IND. INC., Durchmesser ca. 25 µm, 5mm<1<10mm) beigemischt. Warmformgebung und Pyrolyse erfolgen in beschriebener Weise. Der mit WC-Fasern verstärkte $Si\text{-}O_x\text{-}C_y$-Verbundkörper weist Möglichkeiten für eine neue Werkstoffgruppe auf, da bisher Fasern aus Hartstoffen wie z.B. WC, TiC oder NbC konventionellen Herstellungsweisen verschlossen blieben.

**Patentansprüche**

1. Keramischer Verbundkörper aus einer Matrix, die Einlagerungen von Hartstoffteilchen und/oder andere Verstärkungskomponenten enthält, dadurch erhältlich, daß man eine Mischung aus einem siliciumorganischen Polymer mit einem metallischen Füllstoff, der mit den bei der Pyrolyse der Polymerverbindungen entstehenden Zersetzungsprodukten reagiert, einem Pyrolyse- und Reaktionsprozeß unterwirft.

2. Keramischer Verbundkörper nach Anspruch 1, dadurch gekennzeichnet, daß die Matrix eine ein- oder mehrphasige, amorphe, teilkristalline oder kristalline Matrix aus Siliciumcarbid (SiC), Siliciumnitrid ($Si_3N_4$), Siliciumdioxid ($SiO_2$) oder aus Mischungen davon, wie z.B. aus Oxycarbiden, Oxynitriden, Carbonitriden und/oder Oxycarbonitriden, ist.

3. Keramischer Verbundkörper nach Anspruch 1 oder 2, dadurch gekennzeichnet, daß die Einlagerungen von Hartstoffteilchen und/oder anderen Verstärkungskomponenten Carbide und/oder Nitride von Titan, Zirkonium, Hafnium, Vanadium, Niob, Tantal, Chrom, Molybdän und/oder Wolfram sind.

4. Keramischer Verbundkörper nach einem der Ansprüche 1 bis 3, dadurch gekennzeichnet, daß die anderen Verstärkungskomponenten Fasern, Whisker oder Platelets sind.

5. Keramischer Verbundkörper nach einem der Ansprüche 1 bis 4, dadurch gekennzeichnet, daß die Hartstoffteilchen und/oder andere Verstärkungskomponenten in einer Menge von bis zu 70 Volumen-%, bezogen auf den durchreagierten keramischen Formkörper, vorliegen.

6. Verfahren zur Herstellung von keramischen Verbundkörpern nach Anspruch 1 durch Pyrolyse siliciumorganischer Polymerverbindungen, dadurch gekennzeichnet, daß man dem Ausgangspolymer einen metallischen Füllstoff, der mit den bei der Pyrolyse der Polymerverbindungen entstehenden Zersetzungsprodukten reagiert, zumischt.

7. Verfahren nach Anspruch 6, dadurch gekennzeichnet, daß man das Gemisch aus Polymer und Füllstoffkomponenten in die gewünschte Form bringt und dann einem Pyrolyse- und Reaktionsprozeß bei einer Temperatur im Bereich von 600 bis 1500 °C unter Inertgasatmosphäre, Formiergasatmosphäre und/oder in einer Reaktionsatmosphäre unterwirft.

8. Verfahren nach Anspruch 6 oder 7, dadurch gekennzeichnet, daß man als siliciumorganische Polymere Polysilane, Polycarbosilane, Polysilazane und/oder Polysiloxane einsetzt.

9. Verfahren nach einem der Ansprüche 6 bis 8, dadurch gekennzeichnet, daß man als Polymere Aluminium-, Titan-, Zirkonium- und/oder Bor-haltige Precursoren einsetzt.

10. Verfahren nach einem der Ansprüche 6 bis 9, dadurch gekennzeichnet, daß man als reaktive Füllstoffkomponenten solche aus Titan, Zirkonium, Hafnium, Vanadium, Niob, Tantal, Chrom, Molybdän, Wolfram, Aluminium, Bor, Silicium, Lanthaniden und/oder intermetallischen Verbindungen der vierten bis sechsten Nebengruppe der Periodensystems mit Bor, Silicium und/oder Aluminium einsetzt.

11. Verfahren nach Anspruch 10, dadurch gekennzeichnet, daß man als Füllstoffkomponenten metallorganische Verbindungen und Vorstufen, wie z.B. Alkyle, Cycloalkyle, Aryle, Alkoxide und/oder salzartige Verbindungen, wie z.B. Hydride oder Oxide, der Metalle und/oder intermetallischen Verbindungen einsetzt.

12. Verfahren nach einem der Ansprüche 6 bis 11, dadurch gekennzeichnet, daß man die reaktiven Füllstoffkomponenten in löslicher Form, als Pulver und/oder in anderer Form, z.B. als Fasern, Whisker oder Platelets, einsetzt.

13. Verfahren nach einem der Ansprüche 10 bis 12, dadurch gekennzeichnet, daß man zusätzlich zu den Füllstoffkomponenten auf der Basis der in Anspruch 10 angegebenen Metalle und/oder Verbindungen auch solche auf der Basis von Platingruppenmetallen, von Eisen, Kobalt und/oder Nickel einsetzt.

14. Verfahren nach einem der Ansprüche 6 bis 13, dadurch gekennzeichnet, daß man die reaktiven Füllstoffkomponenten mit dem in einem Lösungsmittel gelösten oder schmelzflüssigen siliciumorganischen Polymer mischt.

15. Verfahren nach Anspruch 14, dadurch gekennzeichnet, daß man der Polymer/Füllstoff-Mischung das Lösungsmittel vor der Formgebung weitgehend entzieht und die viskose Suspension bei Temperaturen zwischen 80 und 300 °C durch ein übliches Polymerformungsverfahren in die gewünschte Form bringt.

16. Verfahren nach einem der Ansprüche 6 bis 15, dadurch gekennzeichnet, daß man die Füllstoffkomponenten nach Anspruch 10 in einer Menge einsetzt, die bezogen auf den durchreagierten keramischen Compositwerkstoff bis zu 70 Volumen-% betragen kann.

17. Verfahren nach einem der Ansprüche 6 bis 16, dadurch gekennzeichnet, daß man die zusätzlichen Füllstoffkomponenten nach Anspruch 13 in einer Menge von bis zu 10 Masse-%, bezogen auf den durchreagierten Compositkeramikkörper, einsetzt.

18. Verwendung eines keramischen Verbundkörpers nach einem der Ansprüche 1 bis 5 für Maschinen- und Bauteile mit hoher mechanischer und thermischer Belastbarkeit.

19. Verwendung nach Anspruch 18 für den Einsatz im Motorenbau, in der Luft- und Raumfahrttechnik, in Wärmekraftmaschinen oder als Umformwerkzeuge.

**Claims**

1. Ceramic composite body made of a matrix which contains inclusions of particles of hard material and/or other strengthening components obtainable by subjecting a mixture of an organosilicon polymer and a metallic filler which reacts with the decomposition products formed during the pyrolysis of the polymer compounds to a pyrolytic and reaction process.

2. Ceramic composite body as claimed in claim 1, wherein the matrix is a monophase or polyphase, amorphous, partially crystalline or crystalline matrix of silicon carbide (SiC), silicon nitride ($Si_3N_4$), silicon dioxide ($SiO_2$) or of mixtures thereof such as e.g. of oxycarbides, oxynitrides, carbonitrides and/or oxycarbonitrides.

3. Ceramic composite body as claimed in claim 1 or 2, wherein the inclusions of particles of hard materials and/or other strengthening components are carbides and/or nitrides of titanium, zirconium, hafnium, vanadium, niobium, tantalum, chromium, molybdenum and/or tungsten.

4. Ceramic composite body as claimed in one of the claims 1 to 3, wherein the other strengthening components are fibres, whiskers or platelets.

5. Ceramic composite body as claimed in one of the claims 1 to 4, wherein the particles of hard material and/or the other strengthening components are present in an amount of up to 70 % by volume in relation to the fully reacted ceramic moulded body.

6. Process for the production of ceramic composite bodies as claimed in claim 1 by the pyrolysis of organosilicon polymeric compounds, wherein the initial polymer is admixed with a metallic filler which reacts with the decomposition products formed during the pyrolysis of the polymer compounds.

7. Process as claimed in claim 6, wherein the mixture of polymer and filler component is brought into the desired form and is then subjected to a pyrolytic and reaction process at a temperature in the range of 600 to 1500 °C under an inert gas atmosphere, forming gas atmosphere and/or in a reaction atmosphere.

8. Process as claimed in claim 6 or 7, wherein polysilanes, polycarbosilanes, polysilazanes and/or polysiloxanes are used as the organosilicon polymers.

9. Process as claimed in one of the claims 6 to 8, wherein precursors containing aluminium, titanium, zirconium and/or boron are used as polymers.

10. Process as claimed in one of the claims 6 to 9, wherein the reactive filler components that are used are those made of titanium, zirconium, hafnium, vanadium, niobium, tantalum, chromium, molybdenum, tungsten, aluminium, boron, silicon, lanthanides and/or intermetallic compounds of the fourth to sixth side group of the periodic system with boron, silicon and/or aluminium.

11. Process as claimed in claim 10, wherein organometallic compounds and precursors such as e.g. alkyls, cycloalkyls, aryls, alkoxides and/or salt-like compounds such as e.g. hydrides or oxides of metals and/or intermetallic compounds are used as filler components.

12. Process as claimed in one of the claims 6 to 11, wherein the reactive filler components are used in a soluble form, as a powder and/or in another form e.g. as fibres, whiskers or platelets.

13. Process as claimed in one of the claims 10 to 12, wherein filler components based on platinum group metals, iron, cobalt and/or nickel are also used in addition to those based on the metals and/or compounds set forth in claim 10.

14. Process as claimed in one of the claims 6 to 13, wherein the reactive filler components are mixed with the organosilicon polymer dissolved in a solvent or in a molten state.

15. Process as claimed in claim 14, wherein the solvent is substantially removed from the polymer/filler mixture before moulding and the viscous suspension is brought into the desired form by a conventional polymer forming process at temperatures between 80 and 300 °C.

16. Process as claimed in one of the claims 6 to 15, wherein the filler components according to claim 10 are used in an amount which can be up to 70 % by volume relative to the fully reacted ceramic composite material.

17. Process as claimed in one of the claims 6 to 16, wherein the additional filler components as claimed in claim 13 are used in an amount of up to 10 % by mass relative to the fully reacted composite ceramic body.

18. Use of a ceramic composite body as claimed in one of the claims 1 to 5 for machine and structural parts with a high mechanical load-bearing capacity and high resistance to thermal stress.

19. Use as claimed in claim 18 for an application in engine construction, in aeronautical and astronautical engineering, in thermal engines or as shaping tools.

**Revendications**

1. Corps composite céramique constitué d'une matrice contenant des inclusions de particules de matériaux durs et/ou d'autres composants de renforcement, que l'on peut obtenir en soumettant un mélange d'un polymère organosilicique avec une charge métallique qui réagit avec les produits de décomposition se formant au cours de la pyrolyse des composés polymères, à un processus de pyrolyse et de réaction.

2. Corps composite céramique selon la revendication 1, caractérisé en ce que la matrice est une matrice à une ou plusieurs phases, amorphe, partiellement cristalline ou cristalline obtenue à partir de carbure de silicium (SiC), de nitrure de silicium ($Si_3N_4$), de dioxyde de silicium ($SiO_2$) ou de leurs mélanges, comme par ex. à partir d'oxycarbures, d'oxynitrures, de carbonitrures et/ou d' oxycarbonitrures.

3. Corps composite céramique selon la revendication 1 ou 2, caractérisé en ce que les inclusions de particules de matériaux durs et/ou d'autres composants de renforcement sont des carbures et/ou des nitrures de titane, de zirconium, d'hafnium, de vanadium, de niobium, de tantale, de chrome, de molybdène et/ou de tungstène.

4. Corps composite céramique selon l'une des revendications 1 à 3, caractérisé en ce que les autres composants de renforcement sont des fibres, des whiskers ou des plaquettes.

5. Corps composite céramique selon l'une des revendications 1 à 4, caractérisé en ce que les particules de matériaux durs et/ou les autres composants de renforcement sont présents en une quantité jusqu'à 70% en volume par rapport au corps moulé céramique ayant réagi à coeur.

6. Procédé de préparation de corps composites céramiques selon la revendication 1 par pyrolyse de composés polymères organosiliciques, caractérisé en ce qu'on incorpore au polymère de départ une charge métallique qui réagit avec les produits de décomposition se formant lors de la pyrolyse des composés polymères.

7. Procédé selon la revendication 6, caractérisé en ce qu'on amène le mélange de polymère et de composants de la charge à la forme désirée et le soumet ensuite à un processus de pyrolyse et de réaction à une température dans la gamme de 600 à 1500 °C sous atmosphère de gaz inerte, sous atmosphère de forming gaz et/ou dans une atmosphère de réaction.

8. Procédé selon la revendication 6 ou 7, caractérisé en ce qu'on met en oeuvre en tant que polymères organosiliciques des polysilanes, des polycarbosilanes, des polysilazanes et/ou des polysiloxanes.

9. Procédé selon l'une des revendications 6 à 8, caractérisé en ce qu'on met en oeuvre en tant que polymères des précurseurs contenant de l'aluminium, du titane, du zirconium et/ou du bore.

10. Procédé selon l'une des revendications 6 à 9, caractérisé en ce qu'on met en oeuvre en tant que composants de charge réactifs ceux à base de titane, de zirconium, d'hafnium, de vanadium, de niobium, de tantale, de chrome, de molybdène, de tungstène, d'aluminium, de bore, de silicium, de lanthamides et/ou des composés intermétalliques du quatrième au sixième sous-groupe de la classification périodique des éléments avec du bore, du silicium et/ou de l'aluminium.

11. Procédé selon la revendication 10, caractérisé en ce qu'on met en oeuvre en tant que composants de charge des composés organométalliques et des précurseurs, comme par ex. des alkyles, des cycloalkyles, des aryles, des alcoolates et/ou des composés salins, tels que par ex. des hydrures ou des oxydes, des métaux et/ou des composés intermétalliques.

**12.** Procédé selon l'une des revendications 6 à 11, caractérisé en ce qu'on met en oeuvre les composants de charge réactifs à l'état soluble, sous forme de poudre et/ou sous une autre forme, par ex. sous forme de fibres, de whiskers ou de plaquettes.

**13.** Procédé selon l'une des revendications 10 à 12, caractérisé en ce qu'on met également en oeuvre, en plus des composants de charge à base des métaux et/ou des composés indiqués dans la revendication 10, ceux à base de métaux du groupe du platine, de fer, de cobalt et/ou de nickel.

**14.** Procédé selon l'une des revendications 6 à 13, caractérisé en ce qu'on mélange les composants de charge réactifs avec le polymère organosilicique dissous dans un solvant ou à l'état fondu.

**15.** Procédé selon la revendication 14, caractérisé en ce qu'on élimine dans une large mesure le solvant du mélange polymère/charge avant la mise en forme et amène la suspension visqueuse à la forme voulue à des températures entre 80 et 300 ° C par un procédé de moulage de polymère usuel.

**16.** Procédé selon l'une des revendications 6 à 15, caractérisé en ce qu'on met en oeuvre les composants de charge selon la revendication 10 en une quantité qui, rapportée au matériau composite céramique ayant réagi à fond, peut s'élever jusqu'à 70% en volume.

**17.** Procédé selon l'une des revendications 6 à 16, caractérisé en ce qu'on met en oeuvre les composants de charge additionnels selon la revendication 13 en une quantité jusqu'à 10% en masse par rapport au corps composite céramique ayant réagi à coeur.

**18.** Utilisation d'un corps composite céramique selon l'une des revendications 1 à 5 pour des pièces de machines et des composants possédant une capacité de charge mécanique et thermique élevée.

**19.** Utilisation selon la revendication 18 pour la mise en oeuvre dans la fabrication de moteurs, dans la technique aérospatiale, dans les machines thermiques ou comme outils de formage.

Bild 1

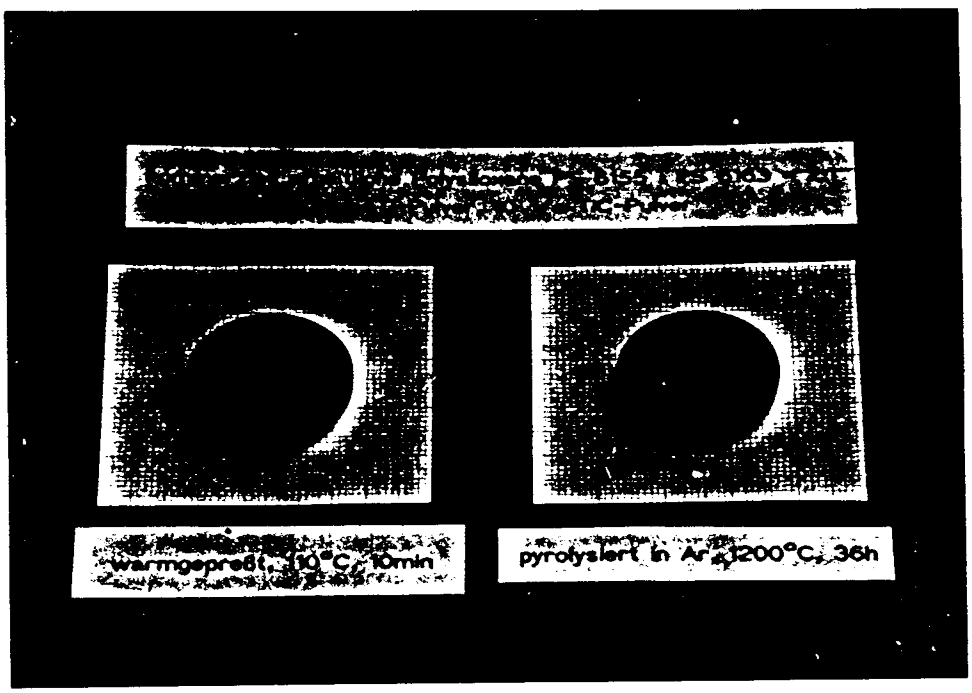

Bild 2

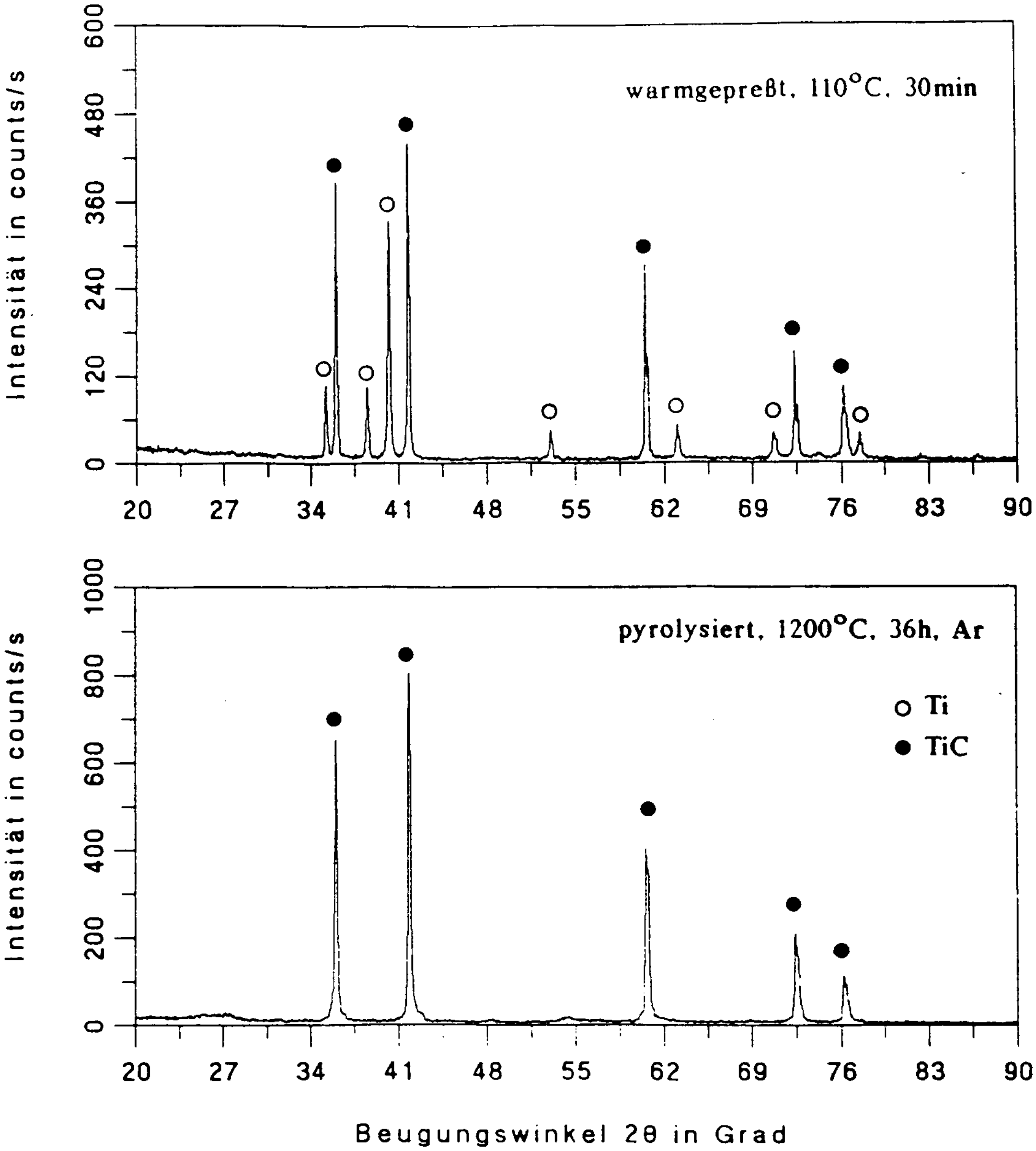
Intensität in counts/s
0
120
240
360
480
600
warmgepreßt, 110°C, 30min
20
27
34
41
48
55
62
69
76
83
90
Intensität in counts/s
0
200
400
600
800
1000
pyrolysiert, 1200°C, 36h, Ar
○ Ti
● TiC
20
27
34
41
48
55
62
69
76
83
90
Beugungswinkel 2θ in Grad

Bild 3

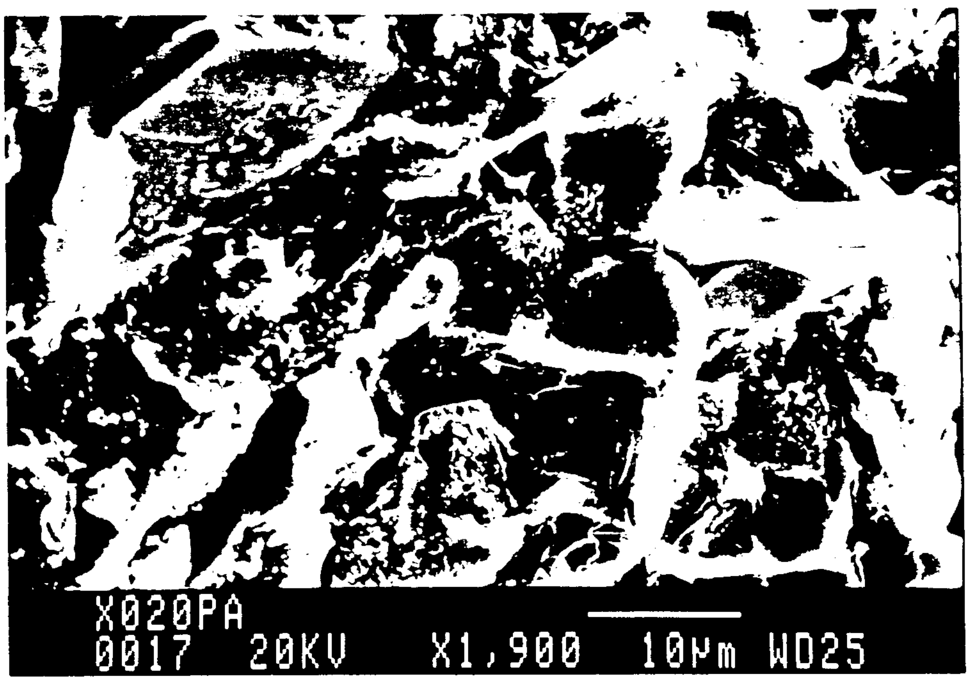

Bild 4